# EUROPÄISCHE PATENTSCHRIFT

(11) **EP 1 732 781 B1**
(45) Veröffentlichungstag und Bekanntmachung des Hinweises auf die Patenterteilung: **25.03.2009**
(21) Anmeldenummer: 05701541.4
(22) Anmeldetag: 18.01.2005
(51) Int. Cl.: B60N 2/00, G01L 1/14, F16B 19/00

(54) **VERBINDUNGSELEMENT ZUR POSITIONIERUNG EINER MAGNETFELDSENSORIK**
CONNECTING ELEMENT FOR POSITIONING A MAGNETIC FIELD SENSOR SYSTEM
ÉLÉMENT DE CONNEXION POUR LE POSITIONNEMENT D' UN CAPTEUR DE CHAMP MAGNÉTIQUE

(30) Priorität: 25.03.2004 DE 102004014670; 28.04.2004 DE 102004020680
(43) Veröffentlichungstag der Anmeldung: 20.12.2006
(73) Patentinhaber: ROBERT BOSCH GMBH, 70442 Stuttgart (DE)
(72) Erfinder: MUNZ, Michael, 72764 Reutlingen (DE); GRUTZECK, Helmut, 72127 Maehringen (DE); WEHRMANN, Johann, 72336 Balingen (DE); HAEUSSERMANN, Conrad, 72820 Sonnenbuehl (DE); KASTEN, Klaus, 72762 Reutlingen (DE); SCHILLER, Uwe, 72074 Tuebingen (DE); DIRSCHERL, Konrad, 72793 Pfullingen (DE)
(86) Internationale Anmeldenummer: PCT/EP2005/050191
(87) Internationale Veröffentlichungsnummer: WO 2005/092662

(56) Entgegenhaltungen:
- DE-A1- 10 111 020
- DE-A1- 10 229 020
- US-A- 5 339 699

## Beschreibung

### Stand der Technik

Die Erfindung geht aus von einem Verbindungselement nach der Gattung des unabhängigen Patentanspruchs.

Aus DE 101 11 020 A1 ist bereits ein Verbindungselement bekannt, das zur Kraftmessung, vorzugsweise in einem Fahrzeugsitz, konfiguriert ist, in dem die Verschiebung zwischen einem Hallsensor und einem Magneten, die durch Krafteinleitung provoziert ist, als Maß für die Kraft gemessen wird.

Aus DE 102 29 020 A1 ist ein Kraftsensor für die Gewichtserfassung an einem Fahrzeugsitz bekannt. Der Kraftsensor weist zwei Biegebalken auf, bei einem festen Ende ein Permanentmagnet mittels eines nichtmagnetischen in eine Bohrung eingepressten Stiftes gehalten und am anderen durch die Biegebalken bewegten Ende ein Hallelement mit einem angeschlossenen integrierten Schaltkreis vorhanden ist. Weiterhin ist eine zusätzliche Spule zur Erzeugung eines Diagnosefeldes vorgesehen.

### Vorteile der Erfindung

Das erfindungsgemäße Verbindungselement mit den Merkmalen des unabhängigen Patentanspruchs habtn demgegenüber den Vorteil, dass nunmehr ein Abgleich, d.h. die Positionierung der Magnetfeldsensorik in die Null-Linie des Magneten einfach und zuverlässig ist. Insbesondere in der Fertigung ist ein solch einfacher Abgleich des Sensors für eine kostengünstige Produktion notwendig. Dafür wird erfindungsgemäß ein Halter vorgeschlagen, der sich in einfacher Weise bewegen lässt, um durch gleichzeitige elektrische Messung an der Magnetfeldsensorik die Null-Linie zu ermitteln. Wurde der Abgleich gefunden, dann erfolgt die Fixierung des Halters auf dem Verbindungselement vorzugsweise durch Laserschweißen. Auf den Halter wird die Magnetfeldsensorik als Hallsensor montiert.

Erfindungsgemäß ist, dass der Halter lediglich linear verschiebbar ist, wobei der Abstand zwischen der Magnetfeldsensorik und dem Magneten konstant gehalten wird. Damit wird die Magnetfeldsensorik, die vorzugsweise ein Hallsensor ist, der als integrierter Schaltkreis vorliegt, nur in einer Ebene bewegt, so dass damit die Null-Linie sehr einfach gefunden werden kann. Die Linearverschiebung in einer Ebene ermöglicht ein Federelement, das der Halter aufweist. Dieses Federelement ist vorzugsweise Teil eines Blechs, das in ein Kunststoffteil des Halters integriert ist. Dabei erfüllt das Federelement die Funktion, dass der Halter, wenn er in das Verbindungselement eingebaut ist, kein Spiel hat, aber dennoch durch geringe Krafteinwirkung bewegbar ist. Dafür können entsprechende Aktuatoren verwendet werden. Dieser Abgleich ist jedoch auch manuell möglich.

Alternativ kann vorteilhafter Weise der Halter durch eine Rotation die Positionierung der Magnetfeldsensorik in die Null-Linie des Magneten ermöglichen. Dazu weist der Halter in einem Bereich eine runde Form auf. Vorzugsweise weist die runde Form verformbare Stege auf, die es ermöglichen, den Halter spielfrei in eine Bohrung des Verbindungselements einzuschieben. Durch Drehen des Halters kann dann die Magnetfeldsensorik in die Null-Lage gedreht werden, so dass damit der Abgleich hergestellt wird.

Durch die in den abhängigen Ansprüchen aufgeführten Maßnahmen und Weiterbildungen sind vorteilhafte Verbesserungen des in dem unabhängigen Patentanspruch angegebenen Verbindungsetements möglich.

Der Halter ist vorteilhafterweise symmetrisch ausgelegt. Dies ermöglicht einen weitgehend spannungsfreien Aufbau. Da der Hallsensor als IC direkt auf den Einlegeteilen montiert ist, wird eine Entkopplung des Hall-ICs von den Kunststoffteilen erreicht. Dies reduziert mögliche mechanische Spannungen, die durch unterschiedliche Temperaturkoeffizienten der verschiedenen Komponenten über den Temperaturbereich möglich sind. Die Kontakte des Hallsensors bzw. alternativ die Einlegeteile sind so geformt, dass ein Höhenunterschied zwischen den Einlegeteilen und den Hallkontakten überbrückt wird.

### Zeichnung

Ausführungsbeispiele der Erfindung sind in der Zeichnung dargestellt und werden in der nachfolgenden Beschreibung näher erläutert.

Es zeigen
- Figur 1: eine Ansicht des Verbindungselements,
- Figur 2: einen Halter für die Magnetfeldsensorik,
- Figur 3: eine Ansicht des Halters bei der Montage,
- Figur 4: den im Verbindungselement eingebauten Halter,
- Figur 5: eine weitere Ansicht des Halters bei der Montage,
- Figur 6: einen Halter mit runder Form,
- Figur 7a und b: den Abgleich mittels Rotation des Halters und
- Figur 8: ein Flussdiagramm.

### Beschreibung

Zunehmend werden Sitzkraftsensoren verwendet, um ein Objekt auf dem Sitz bezüglich seiner Gewichtskraft und Gewichtskraftverteilung zu charakterisieren. Solche Sitzkraftsensoren können vorzugsweise Verbindungselemente sein, die anstatt von Bolzen oder Schrauben in das Sitzgestell eingebaut werden und die derart konfiguriert sind, dass sie die auf den Sitz ausgeübte Gewichtskraft ermitteln können. Dazu wird die Verschiebung eines Magnets zu einer Magnetfeldsensorik, die vorzugsweise ein Hallsensor ist, verwendet. Entscheidend für die Funktion dieses Sitzkraftsensors ist, dass in der unbelasteten Lage die Magnetfeldsensorik in der Null-Linie des Magneten ist, also keine Verschiebung aufweist. Das Verbindungselement besteht aus einem inneren Biegeelement und einer äußeren Hülse, die an einem Ende dicht und fest verschweißt ist. Dieser Zusammenbau ist das aktive Element des Verbindungselements. Innerhalb des Verbindungselements wird die Verschiebung durch Krafteinwirkung durch einen Hallsensor aufgenommen. Bedingt durch die Toleranzen der Bauteile und der Montage ist eine genaue Anordnung des Magneten zum Hallsensor, so dass das Messelement des Hallsensors genau in der Null-Linie des Magnetfelds des Magneten ist, nicht möglich.

Zum Abgleich der Magnetfeldsensoxik in der Fertigung dient der erfindungsgemäß offenbarte Halter.

Der Halter ist so ausgelegt und angeordnet, dass in der Fertigung ein einfacher Abgleich des Sensors, also des Verbindungselements in die Null-Lage des Magnetfelds möglich ist.

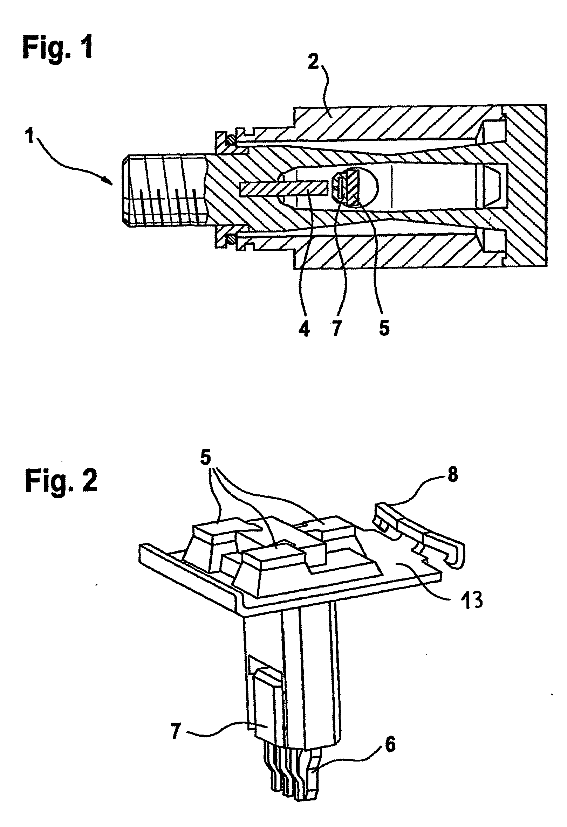

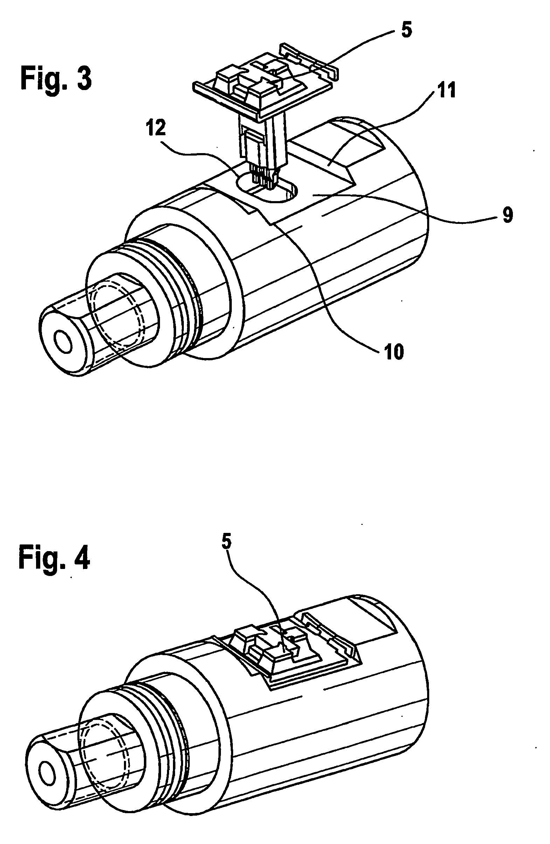

Das aktive Element bzw. die Feder des Sitzkraftsensors besteht aus einem Biegeelement 1, das als Doppelbiegebalken ausgeführt ist, einer angeschweißten Hülse 2. Dies ist in Figur 1 zu sehen. Figur 1 zeigt eine Ansicht des Verbindungselements. Am Biegeelement 1 ist ein Magnet 4 befestigt. Die Hülse 2 hat am Umfang eine Freifräsung 9, also eine Nut und ein Langloch 12, so dass der Halter 5 mit dem Magnetfeldsensor 7, also dem Hall-IC in die Hülse 2 eingebracht werden kann und der Hall-IC 7 vor den Magneten 4 montiert wird. Der Halter 5 besteht aus einem Kunststoffteil, in das ein Blech 13 und Einlegeteile 6 eingespritzt sind. Die Einlegeteile 6 dienen dazu, die Signale der Magnetfeldsensorik nach außen auf drei Kontaktflächen zu führen. Das Blech 13 dient sowohl als Anschlag zur Tiefenbegrenzung, als auch als Anschlag zur Hülse bzw. Nut 10. (Figur 3 und Figur 2). Weiterhin hat das Blech 13 ein integriertes Federelement 8, so dass das Blech 13 in der Nut klemmt, aber sich noch mit geringem Kraftaufwand verschieben lässt. Durch die Feder wird der Halter 5 spielfrei an der Kante 11 angelegt und somit auch während des Abgleichs der Abstand der Magnetfeldsensorik 7 zum Magneten 4 konstant gehalten. Nach dem Abgleich wird das Blech 13 per Laser- oder Widerstandsschweißung mit der Hülse 2 fest verbunden.

Zuerst wird das Verbindugselement in das Langloch der Hülse gesteckt, so dass das Blechteil bündig auf der Abflachung (Nut) der Hülse liegt Die Verrundungen an den Federelementen erleichtern die Einführung des Bleches in die Nut so dass die Federn das Blech gegen die gegenüberliegende Seite drücken (spielfrei).

Danach wird von "oben" eine passende Haltevorrichlung aufgesetzt in der 3 federnde Kontaktstifte eingebracht sind. Diese kontaktierten auf den 3 Kontaktflächen und drücken über ihre Federkraft das Verbindungselement auf die Abflachung. Gleichzeitig greift die Vorrichtung das Blech oder den Kunsstoff des Verbingungselementes auf den zwei freien Seiten.

Mittels der Vorrichtung wird nun das Verbindungselement auf Anschlag oder Weggesteuert auf eine Seite geschoben, so dass der Hall-IC sicher außerhalb der Nullinie ist

Nun wird das Verbindungselement bei gleichzeitiger Signalüberwachung so lange in Richtung Mitte geschoben bis das Ausgangssignal der Mitte entspricht (Null ist). In dieser Position wird mittels Laserschweißen das Blech an die Hülse festgeschweißt und danach die Vorrichtung entfernt.

Bei der Variante mit Drehabgleich wird analog verfahren, jedoch mit Drehbewegung statt Schiebebewegung.

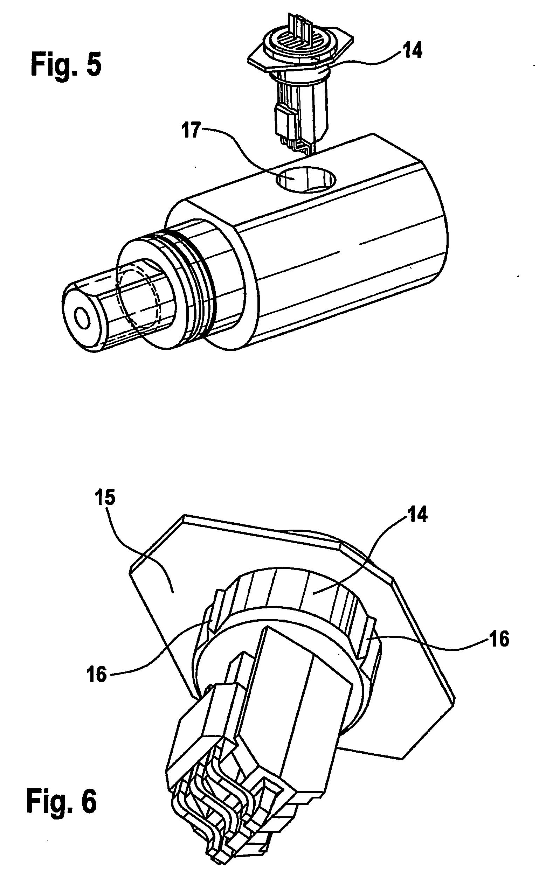

Figur 4 zeigt in einer Seitenansicht den montierten Halter 5 im Langloch 12. Nun kann das Verbindungselement eingebaut werden und elektrisch angeschlossen werden. Figur 5 zeigt einen alternativen Halter beim Einbau in das Verbindungselement. Der Halter weist eine Rundung 14 auf, mit der er in eine Bohrung 17 eingeführt wird. Die runde Form 14 ist unterhalb eines Bleches 15 angeordnet, wie es Figur 6 zeigt. Am Umfang des runden Bereichs 14 sind zumindest drei Stege 16 angeordnet, die verformbar sind und es ermöglichen, dass der Halter spielfrei in die Bohrung 17 geschoben werden kann. Die Bohrung 17 ist in der Hülse 2 eingebracht.

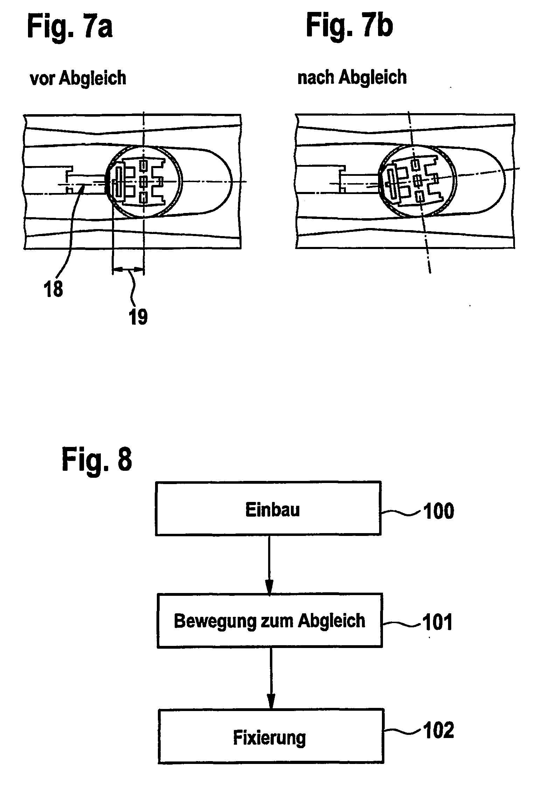

Figur 7a und b zeigen den Abgleich mittels Rotation des Halters. In Figur 7a ist durch das Bezugszeichen 19 der Abstand des Halters von der Symmetriemitte des Halters gekennzeichnet. Mit dem Bezugszeichen 18 ist die Null-Lage gekennzeichnet. In Figur 7a ist ein deutlicher Unterschied zwischen dem Abstand 19 und der Null-Linie 18 zu sehen, der durch den Abgleich behoben werden muss. Der Abstand 19 des Halters von der Symmetriemitte des Halters weg ist dabei so ausgelegt, dass durch Drehen des Halters die Magnetfeldsensorik beim Abgleich in die Null-Lage 18 des Magnetfelds gedreht wird. Dies ist in Figur 7b geschehen. Nun ist der Magnetfeldsensor abgeglichen.

Figur 8 erläutert in einem Flussdiagramm das erfindungsgemäße Verfahren. In Verfahrensschritt 100 erfolgt der Einbau des Halters in die Hülse. In Verfahrensschritt 101 erfolgt dann der Abgleich durch die Bewegung des Halters in der Hülse. Dabei kann eine Linearverschiebung oder eine Rotation des Halters vorgenommen werden. Denkbar ist auch eine Kombination dieser beiden Bewegungsarten. Wurde der Abgleich festgestellt, dann wird in Verfahrensschritt 102 eine Fixierung des Halters in der Hülse vorgenommen, so dass der Abgleich dauerhaften Bestand hat. Diese Fixierung wird vorzugsweise mittels Laser- oder Widerstandsschweißens erreicht. Bei der Linearverschiebung kann dabei beispielsweise das Blech 13 zum Verschweißen verwendet werden.

## Patentansprüche

1. Verbindungselement, das zur Kraftmessung mittels einer Verschiebung zwischen einem Magneten (4) und einer Magnetfeldsensorik (7) konfiguriert ist, **dadurch gekennzeichnet, dass** die Magnetfeldsensorik (7) derart auf einem Halter (5) gelagert ist, dass durch eine Bewegung des Halters (5) die Magnetfeldsensorik (7) in die Null-Linie (18) des Magnetfelds des Magneten (4) positioniert wird, dass der Halter (5) ein Federelement (8) aufweist, so dass der Halter (5) durch eine Linearverschiebung bewegt wird, wobei der Abstand zwischen dem Magneten (4) und der Magnetfeldsensorik (7) konstant gehalten wird oder dass der Halter (5) in einem Bereich eine runde Form (14) aufweist, so dass der Halter (5) durch eine Rotation bewegt wird.

2. Verbindungselement nach Anspruch 1, **dadurch gekennzeichnet, dass** das Federelement (8) Teil eines Bleches (13) ist, wobei das Blech (13) in ein Kunststoffteil des Halters (5) integriert ist.

3. Verbindungselement nach Anspruch 1, **dadurch gekennzeichnet, dass** der Halter (5) in dem Bereich (14) wenigstens drei verformbare Stege (16) aufweist.

4. Verbindungselement nach einem der vorhergehenden Ansprüche, **dadurch gekennzeichnet, dass** der Halter (5) symmetrisch ausgebildet ist und Einlegeteile (6) aufweist, mit denen die Magnetfeldsensorik (7) direkt verbunden ist.

## Claims

1. Connection element which is configured to measure force by means of a displacement between a magnet (4) and a magnetic field sensor system (7), **characterized in that** the magnetic field sensor system (7) is mounted on a holder (5) in such a way that the magnetic field sensor system (7) in positioned in the zero line (18) of the magnetic field of the magnet (4) by means of a movement of the holder (5), **in that** the holder (5) has a spring element (8), so that the holder (5) is moved by means of a linear displacement, wherein the distance between the magnet (4) and the magnetic field sensor system (7) is kept constant, or **in that** the holder (5) has a round shape (14) in one region, so the holder (5) is moved by means of a rotation.

2. Connection element according to Claim 1, **characterized in that** the spring element (8) is part of a metal sheet (13), wherein the metal sheet (13) is integrated in a plastic part of the holder (5).

3. Connection element according to Claim 1, **characterized in that** the holder (5) has at least three deformable webs (16) in the region (14).

4. Connection element according to one of the preceding claims, **characterized in that** the holder (5) is of symmetrical design and has insert parts (6) to which the magnetic field sensor system (7) is directly connected.

## Revendications

1. Elément de liaison configuré pour mesurer des forces au moyen d'un coulissement entre un aimant (4) et un ensemble (7) de détection de champ magnétique,
**caractérisé en ce que**
l'ensemble (7) de détection de champ magnétique est monté sur un support (5) de telle sorte qu'un déplacement du support (5) place l'ensemble (7) de détection de champ magnétique dans la ligne neutre (18) du champ magnétique de l'aimant (4),
**en ce que** le support (5) présente un élément élastique (8) de telle sorte que le support (5) est déplacé par un déplacement linéaire, la distance entre l'aimant (4) et l'ensemble (7) de détection de champ magnétique étant maintenu constante ou
**en ce que** le support (5) présente dans une partie une forme arrondie (14) de telle sorte que le support (5) est déplacé en rotation.

2. Elément de liaison selon la revendication 1, **caractérisé en ce que** l'élément élastique (8) fait partie d'une tôle (13), la tôle (13) étant intégrée dans une partie en matière synthétique du support (5).

3. Elément de liaison selon la revendication 1, **caractérisé en ce que** le support (5) présente au moins trois nervures déformables (16) dans la partie (14).

4. Elément de liaison selon l'une des revendications précédentes, **caractérisé en ce que** le support (5) est symétrique et présente une partie d'insertion (6) à laquelle l'ensemble (7) de détection de champ magnétique est relié directement.
